# EUROPÄISCHE PATENTSCHRIFT

(11) **EP 2 700 598 B1**
(45) Veröffentlichungstag und Bekanntmachung des Hinweises auf die Patenterteilung: **01.10.2014**
(21) Anmeldenummer: 12405088.1
(22) Anmeldetag: 24.08.2012
(51) Int. Cl.: B65G 65/23, B07C 1/02

(54) **Vorrichtung zum Verschwenken von oben offenen, im Wesentlichen quaderförmigen Behältern**
Device for pivoting mainly square-shaped containers with an open top
Dispositif de basculement de récipients principalement carrés ouverts sur le dessus

(43) Veröffentlichungstag der Anmeldung: 26.02.2014
(73) Patentinhaber: Die Schweizerische Post AG, 3030 Bern (CH)
(72) Erfinder: Oberli, Jacques, 1098 Epesses (CH)
(74) Vertreter: Rüfenacht, Philipp Michael

(56) Entgegenhaltungen:
- US-A- 3 595 414
- US-A1- 2007 065 265

## Beschreibung

### Technisches Gebiet

Die Erfindung betrifft eine Vorrichtung zum Verschwenken von oben offenen, im Wesentlichen quaderförmigen Behältern, insbesondere für Briefe, von einer ersten Position in eine zweite Position um eine Schwenkachse.

### Stand der Technik

Eine derartige Schwenkvorrichtung zum Entleeren von Briefgut ist aus der EP 1 829 804 B1 (Gilgen Logistics) bekannt. Bei dieser Vorrichtung wird ein Behälter zwischen einem oberen und einem unteren Klemmelement klemmend gehalten, wobei das obere Klemmelement relativ zum unteren Klemmelement um eine horizontale Achse schwenkbar ist. Die beiden Klemmelemente bilden eine Art offene Zange zum Ein- und Ausbringen eines Behälters. Zur Erzeugung der Klemmkraft ist das obere Klemmelement bevorzugt federnd vorgespannt. Das untere Klemmelement kann als Bodenstütze eines L-förmigen, unter den Behälter greifenden Schwenkarm ausgestaltet sein. Die Schwenkvorrichtung ist in einem rechteckigen Rahmengestell untergebracht, welches an drei Seiten über Öffnungen zum Zu- und Abführen der Behälter aufweist. Innerhalb des Rahmengestells steht ein Behälter auf einer Rollenbahn und wird zwischen das obere und untere Klemmelement geführt.

NL 1025656 C6 (CSI Industries BV) beschreibt eine Schwenkvorrichtung für Briefbehälter. Die Briefbehälter werden durch einen Schlitten von einer Fördereinrichtung auf eine schwenkbare Halterung transferiert, welche eine Öffnung aufweist, die den äusseren Abmessungen der Briefbehälter entspricht. Die Halterung wird anschliessend um eine Drehachse verschwenkt, so dass die im Briefbehälter vorhandenen Briefe aus dem Briefbehälter auf eine Arbeitsfläche einer Vereinzelungsanlage fallen. Die Halterung wird danach wieder in die ursprüngliche Position geschwenkt und der Briefbehälter wird durch den Schlitten wieder aus der Halterung entfernt.

DE 10 2006 031 119 B3 (Siemens AG) offenbart eine Vorrichtung zum Vereinzeln von in einem Stapel angeordneten Sendungen, wobei ein die Sendungen enthaltender Sendungsbehälter geschwenkt wird, um das Hineingreifen durch einen Bediener zu vereinfachen. Die Schwenkbewegung wird durch ein Schwenkmittel verursacht, welches automatisch oder manuell durch den Bediener ausgelöst werden kann. Ein Behälter wird in eine im Wesentlichen U-förmige Halterung verbracht, welche durch ein Gelenkgetriebe um eine Drehachse verschwenkt werden kann. Das Verschwenken erfolgt vorzugsweise in zwei Schritten, wobei in einem ersten Schritt ein Verschwenken um etwa 90° erfolgt. Der entleerte Sendungsbehälter wird durch eine Eingabe des Bedieners durch das Schwenkmittel wieder in die Grundstellung gebracht. Dann kann der leere Sendungsbehälter durch den Bediener gegen einen vollen Sendungsbehälter ausgetauscht werden.

Eine weitere Schwenkvorrichtung wird in US 2005/0220580 A1 (Arnold et al.) gezeigt. Die Schwenkvorrichtung kann einen Briefbehälter um ungefähr 70° um eine Achse schwenken, wobei der genaue Schwenkwinkel je nach Verwendung variieren kann. Der Behälter wird in eine Aufnahmevorrichtung mit einem Boden und zwei seitlichen Wänden aufgenommen, wobei das Schwenken über ein Viergelenksgetriebe erfolgt, welches pneumatisch oder hydraulisch angetrieben wird. Ferner sind Transporteinrichtungen vorgesehen, welche einen Behälter auf die Haltervorrichtung zu sowie von dieser weg bewegen können. Die Vorrichtung verfügt im Weiteren über Sensoren, beispielsweise Fotodioden, Reflektoren oder ähnliche, welche die Position von ausfahrbaren Halterungen der Haltevorrichtung überwachen. Ein Sensor kann auch die Position eines Containers in der Haltevorrichtung überwachen.

EP 0 464 771 A1 (Compagnie Générale d'Automatisme) beschreibt eine Vereinzelungsanlage für flache Artikel, insbesondere für Briefe. Die Vereinzelungsanlage verfügt über eine Fördervorrichtung, einen Endbereich sowie eine Schwenkvorrichtung. Die Schwenkvorrichtung verfügt über eine im Wesentlichen horizontale Aufnahmefläche für Kisten, in denen sich die flachen Artikel befinden. Die Aufnahmefläche weist eine Kippwanne auf. Auf der Aufnahmefläche ist zusätzlich eine Haltekante angeordnet, welche derart angeordnet ist, dass bei einer Schwenkbewegung der Aufnahmefläche eine obere Kante der Kiste auf dieser aufliegt, um die Kiste gegen ein Verrutschen zu sichern. Die Aufnahmefläche ist um eine Achse schwenkbar gelagert, wobei ein Kontakt, der leicht von der Aufnahmefläche hervorsteht, detektiert, ob eine gekippte Kiste auf der Aufnahmefläche liegt, um automatisch eine Schwenkbewegung auszulösen.

Nachteilig an diesen vorbekannten Schwenkvorrichtungen für Behälter ist, dass diese allesamt nur für eine bestimmte Grösse von Behältern ausgelegt sind. Werden hingegen Behälter mit unterschiedlichen Dimensionen verwendet oder weisen die Behälter aufgrund ihres Gebrauchs oder ihrer Fertigung grössere Masstoleranzen auf, passen diese nicht mehr in die Schwenkvorrichtung oder können von diesen nicht mehr sicher gehalten werden.

US 3,595,414 A offenbart eine Vorrichtung zum Verschwenken gemäss dem Oberbegriff des Anspruchs 1.

### Darstellung der Erfindung

Aufgabe der Erfindung ist es, eine dem eingangs genannten technischen Gebiet zugehörende Schwenkvorrichtung zu schaffen, welche Behälter verschiedener Grössen und mit unterschiedlichen Masstoleranzen aufnehmen und sicher verschwenken kann.

Die Lösung der Aufgabe ist durch die Merkmale des Anspruchs 1 definiert. Gemäss der Erfindung weist eine Vorrichtung zum Verschwenken von oben offenen, im Wesentlichen quaderförmigen Behältern von einer ersten Position in eine zweite Position eine um eine Schwenkachse drehbar gelagerte Haltevorrichtung auf, durch die ein Behälter erfassbar ist. Die Haltevorrichtung umfasst mindestens ein unter den Behälter einschiebbares Flächengebilde sowie wenigstens ein zu dem mindestens einen Flächengebilde im rechten Winkel stehendes Verbindungselement. Am wenigstens einen Verbindungselement ist ein zum mindestens einen Flächengebilde beabstandetes Halteelement mit mindestens einem abstehenden Haltefinger angeordnet. Dieses Halteelement ist in einer linearen Bewegung zwischen einer ersten, geöffneten Position und einer zweiten, geschlossenen Position bewegbar. In der geschlossenen Position greift der mindestens eine Haltefinger über einen oberen Rand und hinter eine erste Seitenwand des Behälters, die am wenigstens einen Verbindungselement anliegt, ein.

Das wenigstens eine Verbindungselement weist mindestens zwei aus dieser hervorstehende Drucksensoren auf, welche voneinander in horizontaler Richtung beabstandet sind.

Wird ein Behälter von der Haltevorrichtung erfasst, so werden die Drucksensoren durch den Behälter zum wenigstens einen Verbindungselement hin gedrückt. Durch die Drucksensoren kann ermittelt werden, ob ein Behälter am Verbindungselement anliegt und damit in der Haltevorrichtung erfasst ist oder nicht. Zudem kann durch die in horizontaler Richtung zueinander beabstandete Anordnung der Drucksensoren erfasst werden, ob der Behälter parallel zum wenigstens einen Verbindungselement angeordnet ist. Dies ist dann der Fall, wenn beide Drucksensoren in gleichem Masse durch den Behälter in Richtung des wenigstens einen Verbindungselements gedrückt werden. Ist dies nicht der Fall, liegt der Behälter relativ zum wenigstens einen Verbindungselement schräg in der Haltevorrichtung.

Die Vorrichtung ist insbesondere zum Verschwenken von Behältern für Briefgut geeignet.

Durch die Anordnung eines linear bewegbaren Halteelements an der Haltevorrichtung ist es möglich, Behälter mit unterschiedlich hohen Seitenwänden durch die Haltevorrichtung greifen zu lassen. Je nach Höhe der Seitenwand wird dabei lediglich die Wegstrecke der linearen Bewegung variieren. Durch das Hintergreifen des Haltefingers hinter die erste Seitenwand und dem Aufliegen des Behälters auf dem mindestens einen Flächengebilde bildet sich ein Klemmsitz des Behälters in der Haltevorrichtung, der unabhängig von der Flächenausdehnung der ersten Seitenwand oder der Dimension des Behälters ist. Die erste Seitenwand muss lediglich so dimensioniert sein, dass diese zwischen dem Halteelement und dem mindestens einen Flächengebilde eingeklemmt werden kann.

Die Behälter weisen vorzugsweise die Form eines Quaders auf. Weiter bevorzugt können die Behälter jedoch auch die Form eines Würfels aufweisen. Als "im Wesentlichen quaderförmige Behälter" werden auch Behälter mit abgerundeten Kanten oder Ecken verstanden sowie Behälter in der Form eines Pyramidenstumpfes oder eines Prismas.

Das mindestens eine Flächengebilde weist vorzugsweise eine Form auf, welches das Unterschieben desselben unter einen Behälter vereinfacht. Insbesondere kann das mindestens eine Flächengebilde in Form eines Keiles vorliegen oder zumindest an einer Kante, welche unter den Behälter geschoben wird, dünner ausgestaltet sein. Das mindestens eine Flächengebilde weist vorzugsweise eine quadratische Form auf, wobei einzelne Ecken abgerundet sein können. Weiter bevorzugt kann das mindestens eine Flächengebilde auch eine Form aufweisen, welche in eine im Boden des Behälters eingebrachte Nut eingeführt werden kann. Durch eine derartige Ausgestaltung kann das mindestens eine Flächengebilde als Führung dienen, mit deren Hilfe der Behälter gegenüber der Haltevorrichtung relativ einfach richtig ausgerichtet werden kann. Ferner bevorzugt kann die Haltevorrichtung auch über mehr als ein Flächengebilde verfügen, insbesondere über zwei Flächengebilde. Als Flächengebilde im Sinne der Anmeldung werden auch Gitter, insbesondere aus Draht, verstanden.

Das wenigstens eine Verbindungselement ist vorzugsweise als feste Fläche ausgestaltet, welche eine Dimension aufweist, die mindestens der Grösse der ersten Seitenwand des kleinsten mit dieser Vorrichtung verschwenkbaren Behälters entspricht. Alternativ kann das Verbindungselement auch als einzelne Stütze ausgestaltet sein, die eine kleinere Ausdehnung aufweist als die Seitenfläche des Behälters. Auch kann das Verbindungselement als Rahmen oder in der Form eines Querschnitts eines T-Profils ausgestaltet sein. Ferner können auch mehrere Verbindungselemente an der Haltevorrichtung angeordnet sein oder das Verbindungselement kann als Rahmen mit mindestens einer Öffnung vorliegen.

Das Halteelement ist vorzugsweise derart vom mindestens einen Flächengebilde beabstandet, dass der kleinste Abstand zwischen dem Halteelement und dem mindestens einen Flächengebilde der Höhe des Behälters mit der kleinsten Höhe, der mit der Vorrichtung verschwenkt werden kann, entspricht. Ferner ist das Halteelement derart ausgestaltet, dass der Verschiebungsweg derart lang gewählt ist, dass in der geöffneten Position der Behälter mit der grössten Höhe, der mit der Vorrichtung verschwenkt werden kann, in die Haltevorrichtung eingebracht werden kann, ohne dass der wenigstens eine Haltefinger auf die erste Seitenwand trifft.

Der Haltefinger steht vorzugsweise in einer Richtung, die zum mindestens einen Verbindungselement parallel ist, vom Halteelement ab und weist in Richtung des mindestens einen Flächengebildes. Besonders bevorzugt verfügt das Halteelement über mehr als einen Haltefinger, insbesondere über zwei, drei vier oder fünf Haltefinger. Der mindestens eine Haltefinger ist vorzugsweise als Fläche ausgestaltet, insbesondere als rechteckige Platte, wobei vorzugsweise eine Kante, die auf der in den Behälter eingreifende Seite der Platte liegt, angewinkelt oder abgeflacht ist. Weiter bevorzugt kann der mindestens eine Haltefinger derart dimensioniert sein, dass dieser in mindestens eine entsprechende Nut oder Vertiefung auf der Innenseite der ersten Seitenwand des Behälters eingreifen kann.

Vorzugsweise ist das Halteelement als Stange oder Platte ausgebildet, welche sich parallel zum mindestens einen Flächengebilde erstreckt. Das Halteelement wird bevorzugt über mindestens eine Stütze linear bewegt, welche relativ zum Verbindungselement bewegbar, insbesondere linear verfahrbar ist. Die mindestens eine Stütze weist eine Länge auf, die es ermöglicht, dass das Halteelement in der geöffneten Position derart vom mindestens einen Flächengebilde beabstandet ist, dass der Behälter mit der grössten Höhe, der mit der Vorrichtung verschwenkbar ist, in die Haltevorrichtung verbracht werden kann, ohne dass der wenigstens eine Haltefinger auf die erste Seitenwand trifft. Die mindestens eine Stütze wird besonders bevorzugt innerhalb einer entsprechenden Nut oder einer Bohrung im Verbindungselement geführt. Besonders bevorzugt ist die mindestens eine Stütze mit einem Federelement derart vorgespannt, dass das Halteelement in die geöffnete Position gedrückt wird.

Die Vorrichtung ist insbesondere zum Verschwenken von Behältern mit Briefgut geeignet, beispielsweise als Teil einer Sortieranlage. In Behältern angeliefertes Briefgut muss in der Regel manuell in Vereinzelungsanlagen eingeführt werden, wobei es für das Personal eine körperliche Entlastung darstellt, wenn das Briefgut aus einem um einen bestimmten Winkel verschwenkten Behälter entnommen werden kann. Als Briefgut im Sinne der Anmeldung werden insbesondere Briefe in allen Formaten aber auch Zeitschriften, Zeitungen, Broschüren, Prospekte, Kataloge, Versandmappen, Postkarten, Gerichts- oder Betreibungsurkunden verstanden.

Eine weitere bevorzugte Ausführungsform der Vorrichtung verfügt über einen parallel zur Schwenkachse linear verschiebbaren Auswurffinger, der bei in der Haltevorrichtung erfasstem Behälter auf eine im rechten Winkel zur ersten Seitenfläche stehende zweite Seitenfläche des Behälters einwirkt, um den Behälter seitlich aus der Haltevorrichtung zu stossen.

Der Auswurffinger ermöglicht den Ausstoss eines in die Haltevorrichtung erfassten Behälters in eine Richtung, die zum Verbindungselement parallel steht. Besonders bevorzugt steht diese Ausstossrichtung im rechten Winkel zur Richtung, in die der Behälter in die Haltevorrichtung eingebracht wird. Besonders bevorzugt ist der Auswurffinger als L-Profil ausgebildet, welches in einer entsprechenden Nut des mindestens einen Verbindungselements oder in einer Schiene, die auf oder unter dem mindestens einen Verbindungselement angebracht ist, linear verfahrbar ist.

Ein derartiger Auswurffinger wird vorzugsweise in einer Schwenkvorrichtung mit einer Haltevorrichtung mit einem linear bewegbaren Halteelement gemäss der vorliegenden Erfindung verwendet. Alternativ kann ein derartiger Auswurffinger jedoch auch mit jeder beliebigen Schwenkvorrichtung, welche über ein Halteelement für Behälter verfügt, verwendet werden.

Bevorzugt verfügt die Vorrichtung über eine Kontrolleinheit, mit der zumindest das Verschwenken der Haltevorrichtung sowie das Verschieben des Halteelements und des Auswurffingers gesteuert werden.

Die Kontrolleinheit ist vorzugsweise derart ausgestaltet, dass die einzelnen durch ihr gesteuerten Bewegungen der Vorrichtung koordiniert werden. Beispielsweise kann nach dem Zurückschwenken der Haltevorrichtung die lineare Verschiebung des Halteelements von der geschlossenen in die geöffnete Position erfolgen, wobei anschliessend eine lineare Verschiebung des Auswurffingers ausgelöst wird. Die Kontrollvorrichtung verfügt bevorzugt über einen integrierten Schaltkreis oder einen Mikrochip, um die einzelnen Bewegungen zu steuern. Alternativ kann die Kontrolleinheit jedoch auch mit entsprechenden Schaltrelais oder einer mechanischen Steuerung ausgestattet sein.

Die Vorrichtung verfügt vorzugsweise über erste Fördermittel oder ist an erste Fördermittel anbringbar, welche der Haltevorrichtung vorgelagert und geeignet sind, einen Behälter in einer Förderrichtung in die Haltevorrichtung einzubringen, wobei die Fördermittel vorzugsweise eine Rollenbahn oder ein Förderband umfassen oder sind.

Die Förderrichtung steht bevorzugt im rechten Winkel zum mindestens einen Verbindungselement. Dadurch kann ein Behälter in Förderrichtung gegen das mindestens eine Verbindungselement befördert werden, wobei sich das mindestens eine Flächengebilde unter den Behälter schiebt. Durch die Bewegung des Fördermittels wird der Behälter gegen das mindestens eine Verbindungselement gedrückt, wobei sich der Behälter parallel zu diesem ausrichtet.

Um an einem ersten Fördermittel anbringbar zu sein verfügt die Vorrichtung bevorzugt über Befestigungsmittel, mit denen die Vorrichtung reversibel am ersten Fördermittel angebracht werden kann. Insbesondere handelt es sich dabei um Schrauben, Klemmen oder Bolzen, mit denen die Vorrichtung schnell und einfach am ersten Fördermittel angebracht und wieder entfernt werden kann.

Wenn als erstes Fördermittel eine Rollenbahn verwendet wird, dann ist diese bevorzugt angetrieben, z.B. über einen Elektromotor. Alternativ kann die Rollenbahn jedoch auch nicht angetrieben sein, wobei die Behälter beispielsweise durch Einwirkung der Schwerkraft über eine in einem Winkel zum Boden stehende Rollenbahn zur Vorrichtung bewegt wird.

Vorzugsweise ist die Vorrichtung derart angeordnet, dass das mindestens eine Verbindungselement in einer Aufnahmeposition im Wesentlichen senkrecht zum Boden, auf dem die Vorrichtung steht, angeordnet ist. Dementsprechend weist das wenigstens eine Flächengebilde in horizontaler Richtung vom mindestens einen Verbindungselement in Richtung des ersten Fördermittels weg. Das Fördermittel steht dabei vorzugsweise im Wesentlichen parallel oder in einem spitzen Winkel zum Boden, wobei das in Förderrichtung näher bei der Vorrichtung gelegene Ende des Fördermittels einen geringeren Abstand zum Boden aufweist, als das andere Ende.

Bevorzugt weist die Vorrichtung ein zweites Fördermittel auf oder ist an einem zweiten Fördermittel anbringbar. Dieses zweite Fördermittel ist insbesondere ein weiteres Förderband oder eine weitere Rollenbahn. Besonders bevorzugt werden Behälter nach deren Ver- und Zurückschwenken vom zweiten Fördermittel von der Vorrichtung wegtransportiert. Ganz besonders bevorzugt ist das zweite Fördermittel derart angeordnet, dass ein durch den Auswurffinger seitlich ausgestossener Behälter auf dieses zweite Fördermittel gelangt. Insbesondere kann das zweite Fördermittel parallel zum ersten Fördermittel angeordnet sein.

Bei einer weiteren bevorzugten Ausführungsform einer Vorrichtung zum Verschwenken von Behältern verfügt die Vorrichtung über eine erste Lichtschranke mit einem ersten Lichtweg, wobei sich der erste Lichtweg diagonal durch die Haltevorrichtung erstreckt.

Durch die Lichtschranke kann detektiert werden, ob ein Behälter durch die Haltevorrichtung erfasst ist oder nicht. Der Lichtweg der Lichtschranke erstreckt sich diagonal durch die Haltevorrichtung. Dadurch kann sichergestellt werden, dass das Vorhandensein eines Behälters in der Haltevorrichtung unabhängig von dessen Grösse zuverlässig erkannt werden kann. Auch wird dadurch sichergestellt, dass ein Behälter, welcher aufgrund eines Fehlers nicht vollständig durch die Haltevorrichtung erfasst ist, den Lichtweg unterbricht. Dadurch kann sichergestellt werden, dass selbst dann, wenn ein Behälter nicht vollständig in der Haltevorrichtung erfasst ist, dieser durch die erste Lichtschranke ermittelt werden kann.

Besonders bevorzugt weist die erfindungsgemässe Vorrichtung eine erste Lichtschranke mit einem ersten Lichtweg auf, der sich diagonal durch die Haltevorrichtung erstreckt. Alternativ kann eine erste Lichtschranke mit einem diagonal durch die Haltevorrichtung verlaufenden ersten Lichtstrahl mit jeder anderen Vorrichtung zum Verschwenken von Behältern verwendet werden, welche über eine Haltevorrichtung für Behälter verfügt.

Weiter bevorzugt verfügt die erste Lichtschranke über mindestens einen Reflektor, der in horizontaler Richtung seitlich vom Verbindungselement angeordnet ist, wobei der mindestens eine Reflektor derart schwenkbar gelagert ist, dass dieser von einer ersten, zum Verbindungselement angewinkelten Position zu einer zweiten, mit dem Verbindungselement planen Position bewegt werden kann.

Eine derartige Anordnung hat den Vorteil, dass als erste Lichtschranke eine Reflexionslichtschranke verwendet werden kann, wobei der Reflektor bei der Durchführung von einzelnen Bewegungen der Vorrichtungen in die plane Position bewegt werden kann, um diese nicht zu behindern. Beispielsweise kann beim Ausstossen eines Behälters durch den Auswurffinger der Reflektor in die plane Position bewegt werden, damit dieser den Auswurf nicht behindert.

Bei einer weiteren bevorzugten Ausführungsform einer Vorrichtung zum Verschwenken von Behältern verfügt die Vorrichtung über eine zweite Lichtschranke mit einem zweiten Lichtweg, wobei die zweite Lichtschranke derart angeordnet ist, dass sich der zweite Lichtweg in Förderrichtung unmittelbar vor der Haltevorrichtung und im Wesentlichen im rechten Winkel zur Förderrichtung über das erste Fördermittel erstreckt.

Dadurch kann erfasst werden, ob sich auf dem der Vorrichtung vorgelagerten Abschnitt des Fördermittels ein Behälter befindet. Dies ermöglicht es festzustellen, ob sich auf dem ersten Fördermittel ein Behälter befindet, der sich zu nahe an der Haltevorrichtung befindet und daher den sicheren Betrieb der Vorrichtung gefährdet.

Bevorzugt ist eine zweite Lichtschranke an einer erfindungsgemässen Vorrichtung angebracht. Alternativ kann eine zweite Lichtschranke auch an anderen Vorrichtungen zum Verschwenken von Behältern angebracht werden, welche über eine Haltevorrichtung und über ein Fördermittel verfügen.

Vorzugsweise misst die Kontrolleinheit für mindestens eine der durch die Vorrichtung ausgeführten Bewegungen die seit Beginn der Bewegung verstrichene Zeit und vergleicht diese mit vorgängig gespeicherten Sollwerten, wobei bei einer Überschreitung eines Sollwertes eine Abschaltung der Vorrichtung erfolgt.

Um die vollständige Ausführung einer Bewegung erkennen zu können, verfügt die Kontrolleinheit vorzugsweise über zusätzliche Sensoren, mit welchen die Position einzelner Elemente der Vorrichtung, wie z.B. der Haltevorrichtung oder des Auswurffingers bestimmt werden können. Dabei kann es sich um jede geeignete Art von Sensoren handeln, wie beispielsweise optische Sensoren, Drucksensoren, Kontaktsensoren etc. Alternativ kann die Bestimmung einer abgeschlossenen Bewegung auch über die Leistungsaufnahme des für die Bewegung vorgesehenen Antriebs erfolgen.

Wird für eine bestimmte Bewegung eine längere Zeit benötigt als die gespeicherte Sollzeit, so kann angenommen werden, dass bei der Bewegung ein Fehler aufgetreten ist. Zum Beispiel kann das Verklemmen des Behälters beim Verschwenken den Abschluss der Schwenkbewegung verhindern. Auch bei einem zu hohen Gewicht des Behälters wird die Schwenkbewegung nicht oder nur langsam ausgeführt. Durch das Abschalten der Vorrichtung nach Überschreiten der Sollzeit wird verhindert, dass eine Beschädigung der Vorrichtung oder des Behälters erfolgt. Auch kann dadurch das Verletzungsrisiko einer die Vorrichtung bedienenden Person verringert werden, beispielsweise bei einem eingeklemmten Finger, da nach Verstreichen der Sollzeit die Vorrichtung automatisch ausgeschaltet wird, wobei die Vorrichtung besonders bevorzugt derart ausgestaltet ist, dass bei einer derartigen Abschaltung durch die beweglichen Teile keine Kraft mehr ausgeübt wird.

Vorzugsweise ist die Kontrolleinheit derart konfiguriert, dass nach dem Einbringen eines Behälters in die Haltevorrichtung diese automatisch von der ersten Position in die zweite Position geschwenkt und gehalten wird, wobei das Zurückschwenken in die erste Position manuell über ein Eingabemittel durch eine die Vorrichtung bedienende Person ausgelöst wird, insbesondere über eine Druckknopf.

Um das Verschwenken zu ermöglichen, erfolgt davor automatisch das Verschieben des Halteelements von der geöffneten in die geschlossene Position. Eine derartige Konfiguration des Kontrollmittels hat den Vorteil, dass eine kontinuierliche Arbeit an der Vorrichtung ermöglicht wird. Ein Behälter kann beispielsweise von einem Fördermittel in die Haltevorrichtung verbracht werden, worauf sich die Vorrichtung automatisch verschwenkt damit eine Person das im Behälter enthaltene Briefgut entnehmen kann. Nach abgeschlossener Entleerung kann die Person über ein Eingabemittel das Zurückschwenken der Haltevorrichtung auslösen. Damit der Behälter nach dem Zurückschwenken aus der Haltevorrichtung entfernt werden kann, erfolgt automatisch die Verschiebung des Halteelements in die geöffnete Position. Insbesondere ist als Eingabemittel ein Druckknopf geeignet. Alternativ können auch andere Eingabemittel vorgesehen sein, wie beispielsweise ein Fusspedal oder ein Hebel.

Die Kontrolleinheit ist vorzugsweise derart konfiguriert, dass nach dem Zurückschwenken der Haltevorrichtung in die erste Position eine lineare Bewegung des Auswurffingers ausgelöst wird, um den Behälter aus der Haltevorrichtung auszustossen.

Dadurch wird ermöglicht, dass nach dem erfolgten Ausstoss eines Behälters durch den Auswurffinger ein weiterer Behälter in die Haltevorrichtung eingebracht und durch diese erfasst werden kann, worauf die Haltevorrichtung automatisch in die zweite Position verschwenkt wird. Die im Betrieb der Vorrichtung einzige benötigte manuelle Eingabe ist diejenige zum Zurückschwenken der Haltevorrichtung in die erste Position, wobei alle anderen Bewegungen der Vorrichtung automatisch erfolgen.

Bevorzugt ist die Kontrolleinheit mit dem ersten Fördermittel verbunden und derart konfiguriert, dass nach dem Ausstossen eines Behälters die ersten Fördermittel einen weiteren Behälter in die Haltevorrichtung einbringen, wobei ein Verschwenken der Haltevorrichtung von der ersten Position in die zweite Position erst ausgelöst wird, wenn eine parallele Anordnung der ersten Seitenfläche des weiteren Behälters mit dem wenigstens einen Verbindungselement der Haltevorrichtung durch die mindestens zwei Drucksensoren ermittelt wird.

Dies ermöglicht eine vollständig automatische Kontrolle der Bewegungen der Vorrichtung, wobei durch das erste Fördermittel automatisch ein neuer Behälter in die Haltevorrichtung verbracht und durch diese erfasst wird. Vor dem Verschwenken überprüft die Kontrolleinheit anhand der mindestens zwei Drucksensoren, ob der Behälter korrekt, d.h. mit der ersten Seitenwand parallel zum wenigstens einen Verbindungselement in der Haltevorrichtung ausgerichtet ist, bevor das Halteelement von der geöffneten in die geschlossene Position bewegt wird. Dadurch ist ein sicherer automatischer Betrieb der Vorrichtung möglich.

Bei einer an das erste Fördermittel anbringbaren Vorrichtung verfügt die Kontrolleinheit über entsprechende Mittel, mit denen sich eine Verbindung zum ersten Fördermittel herstellen lässt. Diese Mittel können beispielsweise elektrische Kabel oder ein Datenbus sein.

Vorzugsweise ist das wenigstens eine Verbindungselement parallel zur Schwenkachse angeordnet.

Dadurch erfolgt das Verschwenken des Behälters entlang der ersten Seitenwand des Behälters, welche durch das Halteelement gehalten wird. Nach dem Verschwenken in die zweite Position liegt das Briefgut inwendig auf diese Seitenwand auf. Die Gewichtskraft des Briefgutes wirkt damit fast vollständig auf das wenigstens eine Verbindungselement, auf welchen die erste Seitenwand aufliegt, und nicht auf eine der anderen Seitenwände des Behälters, wodurch eine Beschädigung oder Verformung des Behälters ausgeschlossen wird.

Alternativ kann die Schwenkachse jedoch auch im rechten Winkel zum wenigstens einen Verbindungselement angeordnet sein.

Bevorzugt erfolgen das Verschwenken der Haltevorrichtung sowie die Bewegung des Halteelements und des Auswurffingers pneumatisch.

Dies ermöglicht den Einsatz eines einzigen Kompressors für den Antrieb aller Bewegungen der Vorrichtung. Vorzugsweise können mehrere erfindungsgemässe Vorrichtungen gemeinsam über einen zentralen Kompressor mit Druckluft versorgt werden oder die Vorrichtung wird an eine zentrale Druckluftversorgung eines Gebäudes angeschlossen.

Ein pneumatischer Antrieb hat ferner den Vorteil, dass durch Abschaltung der Druckluftversorgung der Vorrichtung alle beweglichen Teile aktiv keine Kraft mehr ausüben, was insbesondere bei Unfällen das Verletzungsrisiko erheblich verkleinert. Ist beispielsweise ein Körperteil zwischen dem Behälter und dem Halteelement eingeklemmt, wird die durch das Halteelement auf die erste Seitenwand ausgeübte Kraft mit Unterbrechung der Druckluftversorgung augenblicklich unterbrochen.

Bevorzugt verfügt die Vorrichtung über Eingabemittel, welche das Einstellen von verschiedenen Schwenkwinkeln der Haltevorrichtung zwischen der ersten Position und der zweiten Position ermöglichen, insbesondere Schwenkwinkel von 70° und 90°.

Dadurch kann die Vorrichtung auf einen gewünschten Schwenkwinkel eingestellt werden, wodurch sich die Vorrichtung für verschiedene Einsatzarten eignet. Insbesondere bei einem Einsatz an einer Vereinzelungsanlage für Briefgut lässt sich dadurch ein auf die Grösse der bedienenden Person optimal abgestimmter Schwenkwinkel einstellen.

Ein weiterer Aspekt der vorliegenden Erfindung liegt in der Verwendung einer erfindungsgemässen Vorrichtung gemäss vorgehender Beschreibung in einer Sortieranlage für Briefgut, insbesondere für Briefe.

Besonders bevorzugt wird eine erfindungsgemässe Vorrichtung an einer Vereinzelungsanlage für Briefgut eingesetzt, wobei das Briefgut durch einen Mitarbeiter manuell aus einem verschwenkten Behälter auf eine Lauffläche der Vereinzelungsanlage gehoben werden kann. Durch das Verschwenken muss sich der Mitarbeiter nicht so weit nach vorne neigen, um das Briefgut aus dem Behälter zu leeren, wodurch allfällige Rückenbeschwerden oder gar Rückenschäden verhindert werden können. Insbesondere wird bei einem verschwenkten Behälter beim Herausheben des Briefguts der Rücken eines Mitarbeiters mit einem geringeren Gewicht belastet, als dies bei einem nicht verschwenkten Behälter der Fall ist. Zudem erfordert das Herausnehmen des Briefgutes aus dem verschwenkten Behälter weniger Kraft, wodurch Mitarbeiter weniger schnell ermüden. Ferner kann auch ein entsprechend grosser Schwenkwinkel gewählt werden, dass das Briefgut aufgrund der Schwerkraft von alleine aus dem Behälter auf die Lauffläche der Vereinzelungsanlage fällt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine Vorderansicht einer erfindungsgemässen Haltevorrichtung;
- Fig. 2: eine Seitenansicht der Haltevorrichtung der Fig. 1;
- Fig. 3: die Haltevorrichtung der Fig. 2 mit eingebrachtem Behälter;
- Fig. 4: eine Draufsicht der Haltevorrichtung der Fig. 1;
- Fig. 5: eine Draufsicht einer erfindungsgemässen Schwenkvorrichtung;
- Fig. 6: eine perspektivische Ansicht einer weiteren erfindungsgemässen Schwenkvorrichtung; und
- Fig. 7: eine Seitenansicht der Schwenkvorrichtung der Fig. 6.

Grundsätzlich sind in den Figuren gleiche Teile mit gleichen Bezugszeichen versehen.

### Wege zur Ausführung der Erfindung

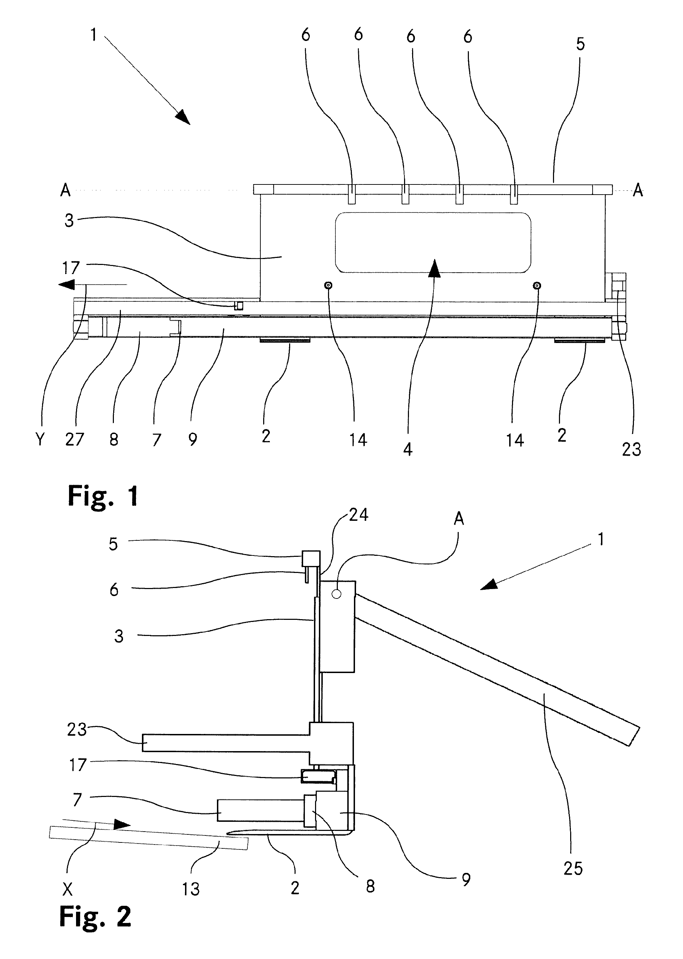

Figur 1 zeigt eine erfindungsgemässe Haltevorrichtung 1 von vorne. Die Haltevorrichtung 1 umfasst zwei in der Ebene der Blickrichtung angeordnete Flächengebilde 2 sowie ein zu diesen im rechten Winkel stehendes Verbindungselement 3. Das Verbindungselement 3 weist mittig eine fensterartige Öffnung 4 auf. Ferner sind zwei zueinander in horizontaler Richtung beabstandete Drucksensoren 14 auf dem Verbindungselement 3 angeordnet, wobei die Drucksensoren 14 von der Oberfläche des Verbindungselements 3 abstehen. Am oberen Rand des Verbindungselements 3 ist ein linear verschiebbares Halteelement 5 mit vier in Richtung der Flächengebilde 2 weisenden Haltefingern 6 angeordnet. In der vorliegenden Figur befindet sich das Halteelement 5 in der geschlossenen Position. Auf der gleichen Höhe ist ferner die horizontale Schwenkachse A angeordnet, um welche die Haltevorrichtung 1 geschwenkt werden kann. Am rechten Rand des Verbindungselements 3 ist eine seitliche Führung 23 angebracht. Diese verhindert einerseits ein seitliches Verrutschen des Behälters aus der Haltevorrichtung 1 und trägt andererseits dazu bei, dass ein Behälter parallel zum Verbindungselement 3 angeordnet werden kann.

Um einen Behälter zu erfassen, wird zunächst das Halteelement 5 linear nach oben in eine geöffnete Position bewegt. Anschliessend wird ein Behälter in die Haltevorrichtung eingebracht, wobei dessen Boden auf die Flächengebilde 2 aufgeschoben und eine erste Seitenwand gegen das Verbindungselement 3 geschoben wird, bis diese auf das Verbindungselement 3 aufliegt. Als letztes wird das Halteelement 5 nach unten in die geschlossene Position bewegt, wobei die vier Haltefinger 6 über einen oberen Rand des Behälters hinter die Seitenwand, die auf dem Verbindungselement 3 aufliegt, greifen.

Zwischen dem unteren Rand des Verbindungselements 3 und den zwei Flächengebilden 2 ist eine Leitschiene 9 angebracht, welche sich vom Betrachter aus gesehen nach links über den Seitenrand des Verbindungselements 3 in einen Auslegearm 27 hinaus erstreckt. Auf der Leitschiene 9 ist ein linear bewegbarer Schlitten 8 angebracht, welcher einen sich in Blickrichtung des Betrachters nach vorne erstreckenden Auswurffinger 7 aufweist. Mit dem Auswurffinger 7 lässt sich ein durch die Haltevorrichtung 1 erfasster Behälter in Ausstossrichtung Y seitlich ausstossen. Beim Erfassen eines Behälters befindet sich der Auswurffinger 7 in einer Grundposition am - aus der Sicht des Betrachters - rechten Rand der Führungsschiene 9. Dabei befindet sich der Auswurffinger 7 parallel zu einer zweiten Seitenwand des Behälters. Beim Ausstossen wird der Auswurffinger 7 linear in die Ausstossrichtung Y bewegt, wobei der Auswurffinger 7 auf die Seitenwand des Behälters drückt, wodurch dieser ebenfalls in Ausstossrichtung Y bewegt wird. In der Figur befindet sich der Auswurffinger in der ausgelenkten Position nach Ausstossen eines Behälters.

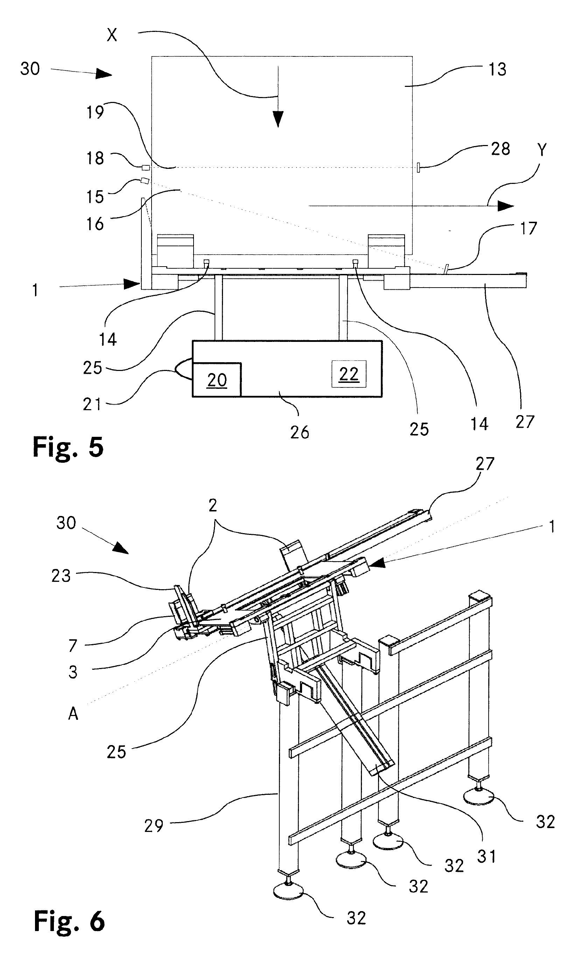

Oberhalb der Leitschiene 9 ist etwas versetzt zum Rand des Verbindungselements 3 ein einklappbarer Reflektor 17 angebracht. Dieser Reflektor 17 ist Teil einer Lichtschranke, mit welcher die Haltevorrichtung 1 überwacht wird. Weitere Details zur Lichtschranke sind unten, im Zusammenhang mit der Figur 5 beschrieben. Der Reflektor 17 steht angewinkelt zur Leitschiene 9. Um beim Ausstossen eines Behälters eine Kollision mit dem Reflektor 17 zu vermeiden, kann dieser nach hinten in eine zum Verbindungselement 3 und der Leitschiene 9 plane Position geklappt werden. Nach dem erfolgten Ausstoss und dem Zurückschieben des Auswurffingers 7 in die Grundposition kann der Reflektor 17 erneut in die angewinkelte Position ausgeklappt werden.

Bei der gezeigten Haltevorrichtung 1 sind die Schwenkbewegung der Haltevorrichtung 1 um die Schwenkachse A, das lineare Verschieben des Halteelements 5 und des Auswurffingers 7 sowie das Einklappen des Reflektors 17 über ein Pneumatiksystem betätigt.

Figur 2 zeigt eine Seitenansicht der Haltevorrichtung 1 der Figur 1. Die Haltevorrichtung 1 ist über die Drehachse A an einer (nicht näher dargestellten) Befestigung 25 drehbar gelagert. Die Befestigung 25 verbindet die Haltevorrichtung 1 mit einem Grundgestell oder einem Gehäuse der Schwenkvorrichtung. Das Verbindungselement 3 ist parallel zur Drehachse A angeordnet. In dieser Figur befindet sich das Halteelement 5 in der geöffneten Position. Um die lineare Verschiebung des Halteelements 5 zu ermöglichen, ist dieses über mindestens eine in einer Führung oder Nut innerhalb des Verbindungselements 3 verschiebbare Stütze 24 angebracht. Gut ersichtlich ist zudem der Abstand der Haltefinger 6 gegenüber dem Verbindungselement 3. Dieser Abstand ist nötig, damit die Haltefinger 6 hinter die Seitenwand des Behälters, welche auf dem Verbindungselement 3 aufliegt, eingreifen können.

Unter dem Verbindungselement 3 sind die Flächengebilde 2 angeordnet, welche im rechten Winkel zum Verbindungselement 3 stehen. Die aus der Sicht des Betrachters links liegende Vorderkante der Flächengebilde 2 ist abgeflacht, um das Erfassen eines Behälters zu erleichtern. Ferner ist ein erstes Fördermittel 13 vor den Flächengebilden 2 angeordnet, welches einen Behälter in Förderrichtung X zum Erfassen in die Haltevorrichtung 1 befördern kann.

Zwischen den Flächengebilden 2 und dem Verbindungselement 3 ist die Leitschiene 9 angeordnet. Auf der Leitschiene 9 befindet sich der bewegbare Schlitten 8, auf dem der Auswurffinger 7 angebracht ist. Der Auswurffinger 7 ist derart dimensioniert, dass ein in der Haltevorrichtung erfasster Behälter ausgestossen werden kann. Etwas oberhalb der Leitschiene 9 ist der in Blickrichtung des Betrachters weiter hinten angeordnete einklappbare Reflektor 17 zu sehen. Die seitliche Führung 23 ist parallel zum Auswurffinger 7 angeordnet.

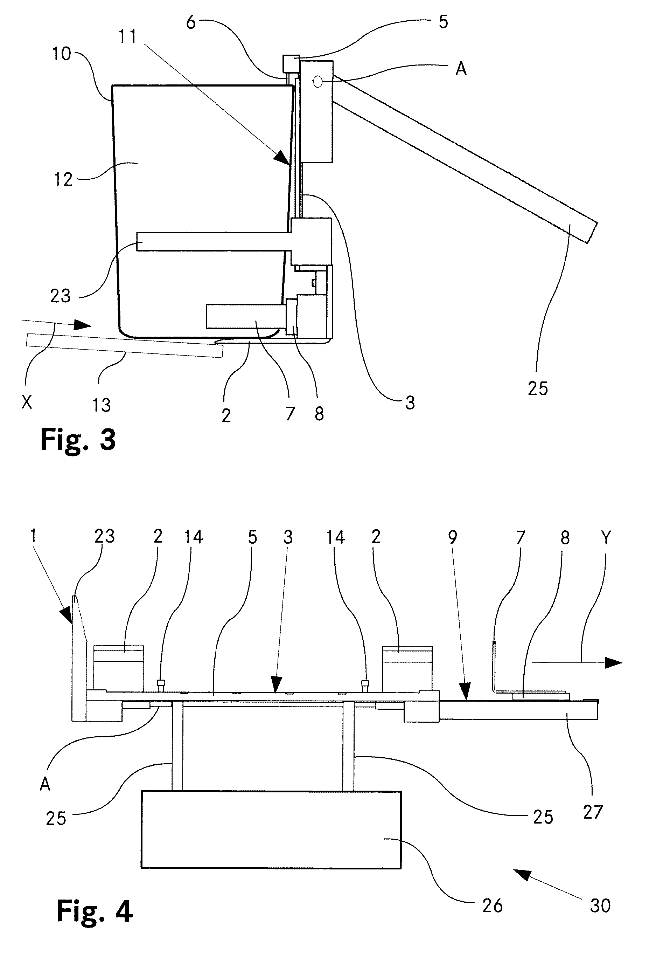

Die Figur 3 bildet die Haltevorrichtung 1 der Figur 2 mit erfasstem Behälter 10 ab. Eine erste Seitenwand 11 des Behälters 10 liegt auf dem Verbindungselement 3 der Haltevorrichtung 1 auf. Das Halteelement 5 ist in die geschlossene Position verschoben dargestellt, wobei die Haltefinger 6 über den oberen Rand des Behälters 10 und hinter die erste Seitenwand 11 eingreifen. Eine zweite Seitenwand 12 des Behälters 10, welche im Wesentlichen im rechten Winkel zur ersten Seitenwand 11 steht, liegt auf der seitlichen Führung 23 sowie dem Auswurffinger 7 auf. Der Boden des Behälters 10 steht auf den Flächengebilden 2. Durch das erste Fördermittel 13 kann der Behälter 10 in Förderrichtung X direkt auf die Flächengebilde 2 befördert werden, ohne dass ein Eingreifen einer Person nötig ist. Obwohl die Flächengebilde 2 sich nicht über die ganze Länge des Bodens des Behälters 10 erstrecken, ist durch das Hintergreifen der ersten Seitenwand 11 durch die Haltefinger 6 dennoch ein Verschwenken der Haltevorrichtung 1 um die Achse A möglich, ohne dass der Behälter 10 aus der Haltevorrichtung 1 fallen kann. Nach dem Zurückschwenken der Haltevorrichtung 1 in die gezeigte erste Position, wird das Halteelement in die geöffnete Position und der Auswurffinger 7 seitlich verschoben, um den Behälter in die in der Blickrichtung des Betrachters nach hinten weisende Ausstossrichtung Y zu stossen.

Figur 4 zeigt die Haltevorrichtung 1 gemäss Figur 1 von oben. Über die Befestigungen 25 ist die Haltevorrichtung 1 mit einem Gehäuse 26 der Schwenkvorrichtung 30 verbunden. In dieser Figur gut ersichtlich sind die aus dem Verbindungselement 3 hervorstehenden Drucksensoren 14. Wird ein Behälter 10 durch die Haltevorrichtung 1 erfasst, werden die Drucksensoren 14 durch die erste Seitenwand 11 des Behälters 10 in Richtung des Verbindungselements 3 verschoben. Durch diese Verschiebung kann eine parallele Anordnung der ersten Seitenwand 11 des Behälters 10 zum Verbindungselement 3 erkannt werden: Sind die beiden Drucksensoren 14 nicht um die gleiche Wegstrecke verschoben worden, ist auch die erste Seitenwand 11 nicht parallel zum Verbindungselement 3 angeordnet.

Die Flächengebilde 2 sind in der Form von Rechtecken ausgebildet, wobei deren Vorderkanten zur besseren Aufnahme eines Behälters 10 leicht abgeflacht sind. Der Auswurffinger 7 ist als L-förmiger Winkel ausgebildet, der auf dem Schlitten 8 angebracht ist und auf diesem in Auswurfrichtung Y linear bewegbar ist. Dabei erstreckt sich die Leitschiene 9 für den Schlitten 8 über den in dieser Figur rechts dargestellten Rand des Verbindungselements 3 auf den Auslegearm 27 hinaus. Die seitliche Führung 23 weist eine nach vorne auslaufende Verjüngung auf, um beim Einbringen eines Behälters 10 eine korrekte Ausrichtung desselben in der Haltevorrichtung 1 zu erleichtern.

In der Figur 5 ist eine erfindungsgemässe Schwenkvorrichtung 30 von oben dargestellt. Ein erstes Fördermittel 13 ist der Haltevorrichtung 1 vorgelagert. Mit dem ersten Fördermittel 13 kann ein Behälter 10 in die Haltevorrichtung 1 befördert und von dieser erfasst werden. Die Haltevorrichtung 1 ist über zwei Befestigungen 25 mit dem Gehäuse 26 der Schwenkvorrichtung 30 verbunden. Im Gehäuse 26 sind eine Kontrolleinheit 20 sowie ein Eingabemittel 21 angeordnet. Mit dem Eingabemittel 21 lässt sich das Zurückschwenken der Haltevorrichtung 1 manuell auslösen. Ferner sind noch zweite Eingabemittel 22 am Gehäuse 26 angeordnet, mit denen sich verschiedene Schwenkwinkel der Haltevorrichtung 1 um die Achse A einstellen lassen.

Eine erste Lichtschranke 15 ist derart an der Schwenkvorrichtung 30 angeordnet, dass ihr erster Lichtweg 16 sich diagonal durch die Haltevorrichtung 1, genauer durch den Aufnahmeraum für die Behälter, erstreckt. Der von der ersten Lichtschranke 15 ausgehende Lichtstrahl wird am angewinkelten Reflektor 17 reflektiert. Mit der ersten Lichtschranke 15 kann die Kontrolleinheit 20 feststellen, ob ein Behälter 10 durch die Haltevorrichtung 1 erfasst ist oder ob die Haltevorrichtung 1 leer ist. Um bei Ausstoss eines Behälters 10 den Weg zum Auslegearm 27 freizugeben, wird der angewinkelte Reflektor 17 zurückgeklappt, so dass dieser plan zum Verbindungselement 3 beziehungsweise zum Auslegearm 27 liegt.

In der Förderrichtung X der Haltevorrichtung 1 vorgelagert ist eine zweite Lichtschranke 18 mit einem zweiten Lichtweg 19 angeordnet. Der zweite Lichtweg 19 erstreckt sich im Wesentlichen rechtwinklig zur Förderrichtung X über das erste Fördermittel 13. Ein zweiter Reflektor 28 reflektiert das von der zweiten Lichtschranke 18 emittierte Licht.

Die Kontrolleinheit 20 ist derart ausgelegt, dass nach erfolgtem Ausstoss eines Behälters 10 über das erste Fördermittel 13 ein weiterer Behälter 10 in Förderrichtung X zur Haltevorrichtung 1 befördert wird. Mittels der beiden Lichtschranken 15, 18 wird vorgängig überprüft, ob die Haltevorrichtung 1 wirklich leer ist und ob sich ein Hindernis auf dem ersten Fördermittel 13 befindet. Dies kann insbesondere der Fall sein, wenn zwei Behälter 10 zu nahe aufeinander auf das erste Fördermittel 13 gelangt sind. Nach dem Erfassen des Behälters 10 durch die Haltevorrichtung 1 wird über die Drucksensoren 14 ermittelt, ob die erste Seitenwand 11 des Behälters 10 parallel zum Verbindungselement 3 angeordnet ist und auf diesem anliegt. Ist dies der Fall, wird automatisch die Verschiebung des Halteelements in die geschlossene Position sowie das Verschwenken der Haltevorrichtung 1 in die zweite Position ausgelöst, wobei das Verschwenken bis zum durch das Eingabemittel 22 ausgewählten Winkel erfolgt. Im Anschluss daran kann der Behälter manuell entleert werden, wobei zum Beispiel Briefgut vom Behälter 10 auf eine Arbeitsfläche einer Vereinzelungsanlage transferiert wird (nicht dargestellt).

Durch Betätigen des entsprechenden Eingabemittels 21 löst eine die Vorrichtung 30 bedienende Person das Zurückschwenken der Haltevorrichtung 1 in die erste Position aus. Nach dem Zurückschwenken wird das Halteelement 5 in die geöffnete Position verschoben, der Reflektor 17 automatisch eingeklappt und der Auswurffinger 7 in der Ausstossrichtung Y bewegt, wobei der Behälter 10 seitlich aus der Haltevorrichtung gestossen wird. In einer weiteren, nicht gezeigten Variante kann ein zweites Fördermittel in Ausstossrichtung Y neben der Haltevorrichtung 1 angeordnet sein, um einen ausgestossenen Behälter 10 weg zu befördern. Zum Schluss wird der Auswurffinger 7 von der Kontrolleinheit 20 wieder entgegen der Ausstossrichtung Y in die Grundposition zurückbewegt und der Reflektor 17 wird wieder ausgeklappt.

Figur 6 zeigt eine weitere Ausführungsform einer erfindungsgemässen Schwenkvorrichtung 30. Bei dieser Ausführungsform ist die Haltevorrichtung 1 an einem Gestell 29 über die Halterung 25 angebracht. Das Gestell 29 steht auf vier Standfüssen 32. Die Haltevorrichtung 1 ist in der zweiten, verschwenkten Position gezeigt. Das Verschwenken um die Achse A erfolgt über einen Pneumatikzylinder 31. In dieser Figur ist ersichtlich, dass die gesamte Haltevorrichtung 1 mitsamt der Führungsschiene 9 und dem Auslegearm 27 verschwenkt wird. Alternativ kann die Führungsschiene 9 jedoch auch fix am Gestell 29 angebracht sein. Die Ausgestaltung mit einem Gestell 29 hat den Vorteil, dass eine derartige Schwenkvorrichtung 30 relativ platzsparend in einer bereits bestehenden Anlage integriert werden kann, wie zum Beispiel in einem Logistik- oder Sortierzentrum.

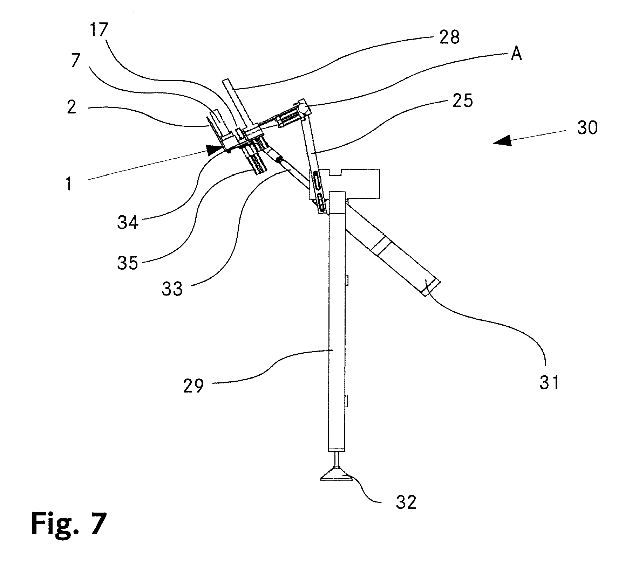

In der Figur 7 ist die Schwenkvorrichtung 30 gemäss Figur 6 in einer Seitenansicht dargestellt, wobei die Haltevorrichtung 1 in der zweiten, geschwenkten Position gezeigt ist. Gut ersichtlich ist die kompakte Bauweise der Schwenkvorrichtung 30, die eine einfache Integration in eine bereits bestehende Anlage ermöglicht. Das Verschwenken der Haltevorrichtung 1 um die Achse A erfolgt über einen Pneumatikzylinder 31, wobei ein Zylinderkolben 33 von hinten auf die Haltevorrichtung 1 einwirkt. Die Befestigung 25 ist starr ausgebildet. In dieser Figur gut sichtbar sind zudem die Drucksensorgehäuse 34 sowie der Pneumatikantrieb 35 für den einklappbaren Reflektor 17.

Während in den gezeigten Ausführungsbeispielen stets ein Ausstoss der Behälter von oben betrachtet nach rechts dargestellt ist, kann eine erfindungsgemässe Vorrichtung auch derart gebaut werden, dass ein Ausstoss nach links erfolgt. Hinsichtlich der Dimension der Vorrichtung kann ein Fachmann leicht erkennen, dass diese konstruktiv an verschiedene Grössen und Gewichte von Behältern angepasst werden kann. Auch kann ein Antrieb auf andere Weise als dem hier beschriebenen pneumatischen Antrieb erfolgen, z.B. hydraulisch oder elektrisch. Ferner kann die erfindungsgemässe Vorrichtung über weitere, hier nicht offenbarte Sensoren verfügen, beispielsweise über einen Gewichtssensor, der ein Verschwenken der Haltevorrichtung verhindert, falls ein Behälter ein vorbestimmbares Maximalgewicht übersteigt.

## Patentansprüche

1. Vorrichtung zum Verschwenken von oben offenen, im Wesentlichen quaderförmigen Behältern (10), insbesondere Behälter (10) für Briefgut, von einer ersten Position in eine zweite Position um eine Schwenkachse (A), umfassend eine um die Schwenkachse (A) drehbar gelagerte Haltevorrichtung (1), durch die ein Behälter (10) erfassbar ist, wobei die Haltevorrichtung (1) mindestens ein unter den Behälter (10) einschiebbares Flächengebilde (2) sowie wenigstens eine zu dem mindestens einen Flächengebilde (2) im rechten Winkel stehendes Verbindungselement (3) aufweist wobei am wenigstens einen Verbindungselement (3) ein zum mindestens einen Flächengebilde (2) beabstandetes Halteelement (5) mit mindestens einem abstehenden Haltefinger (6) angeordnet ist, welches in einer linearen Bewegung zwischen einer ersten, geöffneten Position und einer zweiten, geschlossenen Position bewegbar ist, wobei in der geschlossenen Position der mindestens eine Haltefinger (6) über einen oberen Rand und hinter eine erste Seitenwand (11) des Behälters (10), die am wenigstens einen Verbindungselement (3) anliegt, eingreift, **dadurch gekennzeichnet, dass** das wenigstens eine Verbindungselement (3) mindestens zwei aus diesem hervorstehende Drucksensoren (14) aufweist, welche voneinander in horizontaler Richtung beabstandet sind.

2. Vorrichtung gemäss Anspruch 1, **dadurch gekennzeichnet, dass** die Vorrichtung (30) über einen parallel zur Schwenkachse (A) linear verschiebbaren Auswurffinger (7) verfügt, der bei in die Haltevorrichtung (1) erfassten Behälter (10) auf eine im rechten Winkel zur ersten Seitenwand (11) stehende zweite Seitenwand (12) des Behälters (10) einwirkt, um den Behälter (10) seitlich aus der Haltevorrichtung (1) zu stossen.

3. Vorrichtung gemäss Anspruch 2, **dadurch gekennzeichnet, dass** die Vorrichtung (30) über eine Kontrolleinheit (20) verfügt, mit der zumindest das Verschwenken der Haltevorrichtung (1) sowie das Verschieben des Halteelements (5) und des Auswurffingers (7) gesteuert werden.

4. Vorrichtung gemäss einem der Ansprüche 1 bis 3, **dadurch gekennzeichnet, dass** die Vorrichtung (30) über erste Fördermittel (13) verfügt oder an erste Fördermittel (13) anbringbar ist, welche der Haltevorrichtung (1) vorgelagert und geeignet sind, einen Behälter (10) in einer Förderrichtung (X) in die Haltevorrichtung (1) einzubringen, wobei die ersten Fördermittel (13) vorzugsweise eine Rollenbahn oder ein Förderband umfassen oder sind.

5. Vorrichtung gemäss einem der Ansprüche 1 bis 4, **dadurch gekennzeichnet, dass** die Vorrichtung über eine erste Lichtschranke (15) mit einem ersten Lichtweg (16) verfügt, wobei sich der erste Lichtweg (16) diagonal durch die Haltevorrichtung (1) erstreckt.

6. Vorrichtung nach Anspruch 5, **dadurch gekennzeichnet, dass** die erste Lichtschranke (15) über mindestens einen Reflektor (17) verfügt, der in horizontaler Richtung seitlich vom Verbindungselement (3) angeordnet ist, wobei der mindestens eine Reflektor (17) derart schwenkbar gelagert ist, dass dieser von einer ersten, zum Verbindungselement (3) angewinkelten Position zu einer zweiten, mit dem Verbindungselement (3) planen Position bewegt werden kann.

7. Vorrichtung gemäss einem der Ansprüche 4 bis 6, **dadurch gekennzeichnet, dass** die Vorrichtung (30) über eine zweite Lichtschranke (18) mit einem zweiten Lichtweg (19) verfügt, wobei die zweite Lichtschranke (18) derart angeordnet ist, dass sich der zweite Lichtweg (19) in Förderrichtung (X) unmittelbar vor der Haltevorrichtung (3) und im Wesentlichen im rechten Winkel zur Förderrichtung (X) über das erste Fördermittel (13) erstreckt.

8. Vorrichtung gemäss einem der Anspruche 3 bis 7, **dadurch gekennzeichnet, dass** die Kontrolleinheit (20) für mindestens eine der durch die Vorrichtung (30) ausgeführten Bewegungen die seit Beginn der Bewegung verstrichene Zeit misst und diese mit vorgängig gespeicherten Sollwerten vergleicht, wobei bei einer Überschreitung eines Sollwertes eine Abschaltung der Vorrichtung (30) erfolgt.

9. Vorrichtung gemäss einem der Ansprüche 3 bis 8, **dadurch gekennzeichnet, dass** die Kontrolleinheit (20) derart konfiguriert ist, dass nach dem Einbringen eines Behälters (10) in die Haltevorrichtung (1) diese automatisch von der ersten Position in die zweite Position geschwenkt und gehalten wird, wobei das Zurückschwenken in die erste Position manuell über ein Eingabemittel (21) durch eine die Vorrichtung bedienende Person ausgelöst wird, insbesondere über einen Druckknopf.

10. Vorrichtung gemäss Anspruch 9, **dadurch gekennzeichnet, dass** die Kontrolleinheit (20) derart konfiguriert ist, dass nach dem Zurückschwenken der Haltevorrichtung (1) in die erste Position eine lineare Bewegung des Auswurffingers (7) ausgelöst wird, um den Behälter (10) aus der Haltevorrichtung (1) auszustossen.

11. Vorrichtung gemäss einem der Ansprüche 3 bis 10, **dadurch gekennzeichnet, dass** die Kontrolleinheit (20) mit den ersten Fördermittel (13) verbunden oder verbindbar ist und derart konfiguriert ist, dass nach dem Ausstossen eines Behälters (10) die ersten Fördermittel (13) einen weiteren Behälter (10) in die Haltevorrichtung (1) einbringen, wobei ein Verschwenken der Haltevorrichtung (1) von der ersten Position in die zweite Position erst ausgelöst wird, wenn eine parallele Anordnung der ersten Seitenwand (11) des weiteren Behälters (10) mit dem mindestens einen Verbindungselement (3) der Haltevorrichtung (1) durch die mindestens zwei Drucksensoren (14) ermittelt wird.

12. Vorrichtung gemäss einem der Ansprüche 1 bis 11, **dadurch gekennzeichnet, dass** das wenigstens eine Verbindungselement (3) parallel zur Schwenkachse (A) angeordnet ist.

13. Vorrichtung gemäss einem der Ansprüche 2 bis 12, **dadurch gekennzeichnet, dass** das Verschwenken der Haltevorrichtung (1) sowie die Bewegung des Halteelements (5) und des Auswurffingers (7) pneumatisch erfolgen.

14. Vorrichtung gemäss einem der Ansprüche 1 bis 13 **dadurch gekennzeichnet, dass** die Vorrichtung (30) über zweite Eingabemittel (22) verfügt, welche das Einstellen von verschiedenen Schwenkwinkeln der Haltevorrichtung (1) zwischen der ersten Position und der zweiten Position ermöglichen, insbesondere Schwenkwinkel von 70° und 90°.

15. Verwendung einer Vorrichtung (30) gemäss einem der Ansprüche 1 bis 14 in einer Sortieranlage für Briefgut, insbesondere für Briefe.

## Claims

1. Apparatus for pivoting open-top, essentially cuboidal containers (10), in particular containers (10) for mail, from a first position into a second position about a pivot axis (A), comprising a retaining apparatus (1), which is mounted such that it can be rotated about the pivot axis (A) and which can grip a container (10), wherein the retaining apparatus (1) has at least one flat structure (2), which can be pushed beneath the container (10), and at least one connecting element (3), which is at right angles to the at least one flat structure (2), wherein the at least one connecting element (3) has arranged on it a retaining element (5) which is spaced apart from the at least one flat structure (2), has at least one projecting retaining finger (6) and can be moved in a linear movement between a first, open position and a second, closed position, wherein, in the closed position, the at least one retaining finger (6) engages over an upper periphery and behind a first side wall (11) of the container (10), said side wall butting against the at least one connecting element (3), **characterized in that** the at least one connecting element (3) has at least two pressure sensors (14), which project out of the connecting element and are spaced apart from one another in the horizontal direction.

2. Apparatus according to Claims, **characterized in that** the apparatus (30) has an ejecting finger (7), which can be displaced linearly parallel to the pivot axis (A) and, with a container (10) gripped in the retaining apparatus (1), acts on a second side wall (12) of the container (10), said second side wall being at right angles to the first side wall (11), in order to push the container (10) laterally out of the retaining apparatus (1).

3. Apparatus according to Claim 2, **characterized in that** the apparatus (30) has a control unit (20), which controls at least the pivoting operation of the retaining apparatus (1) and the displacement operation of the retaining element (5) and of the ejecting finger (7).

4. Apparatus according to one of Claims 1 to 3, **characterized in that** the apparatus (30) has first conveying means (13), or can be fitted on first conveying means (13), which are mounted upstream of the retaining apparatus (1) and are suitable for introducing a container (10) into the retaining apparatus (1) in a conveying direction (X), wherein the first conveying means (13) preferably comprise, or are in the form of, a roller conveyor or a conveying belt.

5. Apparatus according to one of Claims 1 to 4, **characterized in that** the apparatus has a first light barrier (15) with a first light path (16), wherein the first light path (16) extends diagonally through the retaining apparatus (1).

6. Apparatus according to Claim 5, **characterized in that** the first light barrier (15) has at least one reflector (17), which is arranged horizontally to the side of the connecting element (3), wherein the at least one reflector (17) is mounted in a pivotable manner such that it can be moved from a first position, in which it is angled in relation to the connecting element (3), to a second position, in which it is in the same plane as the connecting element (3).

7. Apparatus according to one of Claims 4 to 6, **characterized in that** the apparatus (30) has a second light barrier (18) with a second light path (19), wherein the second light barrier (18) is arranged such that the second light path (19) extends directly in front of the retaining apparatus (3), as seen in the conveying direction (X), and over the first conveying means (13), essentially at right angles to the conveying direction (X).

8. Apparatus according to one of Claims 3 to 7, **characterized in that** the control unit (20), for at least one of the movements executed by the apparatus (30), measures the time elapsed since the beginning of the movement and compares this with desired values which have been stored beforehand, wherein, in the case of the desired value being exceeded, the apparatus (30) is switched off.

9. Apparatus according to one of Claims 3 to 8, **characterized in that** the control unit (20) is configured such that, once the container (10) has been introduced into the retaining apparatus (1), the latter is automatically pivoted from the first position into the second position and retained, wherein the operation of pivoting back the same into the first position is triggered manually via an input means (21), in particular via a push button, by a person operating the apparatus.

10. Apparatus according to Claim 9, **characterized in that** the control unit (20) is configured such that, once the retaining apparatus (1) has been pivoted back into the first position, a linear movement of the ejecting finger (7) is triggered, in order to push the container (10) out of the retaining apparatus (1).

11. Apparatus according to one of Claims 3 to 10, **characterized in that** the control unit (20) is, or can be, connected to the first conveying means (13) and is configured such that, once the container (10) has been pushed out, the first conveying means (13) introduce a further container (10) into the retaining apparatus (1), wherein pivoting of the retaining apparatus (1) from the first position into the second position is triggered only when the at least two pressure sensors (14) establish a parallel arrangement of the first side wall (11) of the further container (10) and the at least one connecting element (3) of the retaining apparatus (1).

12. Apparatus according to one of Claims 1 to 11, **characterized in that** the at least one connecting element (3) is arranged parallel to the pivot axis (A).

13. Apparatus according to one of Claims 2 to 12, **characterized in that** the operations of pivoting the retaining apparatus (1) and of moving the retaining element (5) and the ejecting finger (7) take place pneumatically.

14. Apparatus according to one of Claims 1 to 13, **characterized in that** the apparatus (30) has second input means (22), which make it possible to set different pivoting angles of the retaining apparatus (1) between the first position and the second position, in particular pivoting angles of 70° and 90°.

15. Use of an apparatus (30) according to one of Claims 1 to 14 in a sorting installation for mail, in particular for letters.

## Revendications

1. Dispositif de pivotement de récipients (10) essentiellement parallélépipédiques ouverts sur le dessus, en particulier de récipients (10) pour du courrier, à partir d'une première position jusqu'à une deuxième position autour d'un axe de pivotement (A), comprenant un dispositif de retenue (1) monté à rotation autour de l'axe de pivotement (A), au moyen duquel dispositif de retenue un récipient (10) peut être saisi, le dispositif de retenue (1) comprenant au moins une structure plane (2) pouvant être insérée en dessous du récipient (10) ainsi qu'au moins un élément de liaison (3) situé à angle droit par rapport à l'au moins une structure plane (2), un élément de retenue (5) espacé par rapport à l'au moins une structure plane (2) et comprenant au moins un doigt de retenue (6) saillant étant disposé sur l'au moins un élément de liaison (3), lequel élément de retenue peut être déplacé suivant un déplacement linéaire entre une première position ouverte et une deuxième position fermée, l'au moins un doigt de retenue (6) venant en prise, dans la position fermée, par le biais d'un bord supérieur et derrière une première paroi latérale (11) du récipient (10), laquelle s'applique contre l'au moins un élément de liaison (3), **caractérisé en ce que** l'au moins un élément de liaison (3) comprend au moins deux capteurs de pression (14) faisant saillie à partir de celui-ci, lesquels sont espacés les uns des autres dans la direction horizontale.

2. Dispositif selon la revendication 1, **caractérisé en ce que** le dispositif (30) possède un doigt d'éjection (7) déplaçable linéairement paxaJ.lèlement à l'axe de pivotement (A), lequel doigt d'éjection, lorsque le récipient (10) est saisi dans le dispositif de retenue (1), agit sur une deuxième paroi latérale (12) du récipient (10) située à angle droit par rapport à la première paroi latérale (11), afin d'expulser le récipient (10) latéralement hors du dispositif de retenue (1).

3. Dispositif selon la revendication 2, **caractérisé en ce que** le dispositif (30) possède une unité de contrôle (20) à l'aide de laquelle au moins le pivotement du dispositif de retenue (1) ainsi que le déplacement de l'élément de retenue (5) et du doigt d'éjection (7) sont commandés.

4. Dispositif selon l'une quelconque des revendications 1 à 3, **caractérisé en ce que** le dispositif (30) possède des premiers moyens de transport (13) ou peut être monté sur des premiers moyens de transport (13), lesquels sont placés en amont du dispositif de retenue (1) et sont appropriées pour introduire un récipient (10) dans le dispositif de retenue (1) dans un sens de transport (X), les premiers moyens de transport (13) comportant ou étant de préférence un transporteur à rouleaux ou une bande transporteuse.

5. Dispositif selon l'une quelconque des revendications 1 à 4, **caractérisé en ce que** le dispositif possède une première barrière lumineuse (15) présentant un premier chemin optique (16), le premier chemin optique (16) s'étendant en diagonale à travers le dispositif de retenue (1).

6. Dispositif selon la revendication 5, **caractérisé en ce que** la première barrière lumineuse (15) possède au moins un réflecteur (17) qui est disposé dans la direction horizontale latéralement par rapport à l'élément de liaison (3), l'au moins un réflecteur (17) étant monté pivotant de telle sorte que celui-ci puisse être déplacé à partir d'une première position inclinée par rapport à l'élément de liaison (3) jusqu'à une deuxième position plane par rapport à l'élément de liaison (3).

7. Dispositif selon l'une quelconque des revendications 4 à 6, **caractérisé en ce que** le dispositif (30) possède une deuxième barrière lumineuse (18) présentant un deuxième chemin optique (19), la deuxième barrière lumineuse (18) étant disposée de telle sorte que le deuxième chemin optique (19) s'étend directement devant le dispositif de retenue (3) dans le sens de transport (X) et s'étend essentiellement à angle droit par rapport au sens de transport (X) sur le premier moyen de transport (13).

8. Dispositif selon l'une quelconque des revendications 3 à 7, **caractérisé en ce que**, pour au moins l'un des déplacements effectués par le dispositif (30), l'unité de contrôle (20) mesure le temps écoulé depuis le début du déplacement et compare celui-ci à des valeurs de consigne préalablement mises en mémoire, un arrêt du dispositif (30) s'effectuant lorsqu'une valeur de consigne est dépassée.

9. Dispositif selon l'une quelconque des revendications 3 à 8, **caractérisé en ce que** l'unité de contrôle (20) est configurée de telle sorte qu'après l'introduction d'un récipient (10) dans le dispositif de retenue (1), celui-ci est automatiquement pivoté à partir de la première position jusqu'à la deuxième position et est maintenu, le retour par pivotement à la première position étant déclenché manuellement par une personne commandant le dispositif, par le biais d'un moyen d'entrée (21), en particulier par le biais d'un bouton-poussoir.

10. Dispositif selon la revendication 9, **caractérisé en ce que** l'unité de contrôle (20) est configurée de telle sorte qu'après le retour par pivotement du dispositif de retenue (1) à la première position, un déplacement linéaire du doigt d'éjection (7) est déclenché afin d'expulser le récipient (10) hors du dispositif de retenue (1).

11. Dispositif selon l'une quelconque des revendications 3 à 10, **caractérisé en ce que** l'unité de contrôle (20) est reliée ou peut être reliée aux premiers moyens de transport (13) et est configurée de telle sorte qu'après l'expulsion d'un récipient (10), les premiers moyens de transport (13) introduisent un récipient supplémentaire (10) dans le dispositif de retenue (1), un pivotement du dispositif de retenue (1) à partir de la première position jusqu'à la deuxième position n'étant déclenché que lorsqu'un agencement en parallèle de la première paroi latérale (11) du récipient supplémentaire (10) et de l'au moins un élément de liaison (3) du dispositif de retenue (1) est détecté au moyen des au moins deux capteurs de pression (14).

12. Dispositif selon l'une quelconque des revendications 1 à 11, **caractérisé en ce que** l'au moins un élément de liaison (3) est disposé parallèlement à l'axe de pivotement (A).

13. Dispositif selon l'une quelconque des revendications 2 à 12, **caractérisé en ce que** le pivotement du dispositif de retenue (1) ainsi que le déplacement de l'élément de retenue (5) et du doigt d'éjection (7) s'effectuent de manière pneumatique.

14. Dispositif selon l'une quelconque des revendications 1 à 13, **caractérisé en ce que** le dispositif (30) possède des deuxièmes moyens d'entrée (22), lesquels permettent le réglage de différents angles de pivotement du dispositif de retenue (1) entre la première position et la deuxième position, en particulier d'angles de pivotement de 70° et de 90°.

15. Utilisation d'un dispositif (30) selon l'une quelconque des revendications 1 à 14, dans une installation de tri pour du courrier, en particulier pour des lettres.
